# EUROPÄISCHE PATENTANMELDUNG

(11) **EP 4 495 356 A1**
(43) Veröffentlichungstag der Anmeldung: **22.01.2025**
(21) Anmeldenummer: 24186095.6
(22) Anmeldetag: 02.07.2024
(51) Int. Cl.: E04H 7/06, A01C 3/02

(54) **RUNDE BAULICHE ANLAGE MIT EINEM VON EINEM GESPANNTEN SEIL GEBILDETEN DACHTRÄGER**

(30) Priorität: 17.07.2023 DE 102023118810
(71) Anmelder: K + M Silotechnik GmbH, 74076 Heilbronn (DE)
(72) Erfinder: Koch, Peter, 74076 Heilbronn (DE)
(74) Vertreter: Gleim Petri Patent- und Rechtsanwaltspartnerschaft mbB

(57) **Zusammenfassung**

Runde bauliche Anlage bestehend aus einer hohlzylinderformigen Wand (1), und einem Dach, umfassend einen Dachträger (4) und eine Dachhaut. Der Dachträger (4) enthält einen Firstring (6) und ein Seil (7), welches zwischen dem Firstring (6) und der Wand (1) im Wechsel teilweise in einer der Wand (1) zugewandten Konusmantelfläche (14) und teilweise in einer der Wand (1) abgewandten Konusmantelfläche (14) gespannt ist, wobei die der Wand (1) abgewandte Konusmantelfläche (14) mit der Wand (1) eine Dachneigung (α) bildet.

## Beschreibung

Die Erfindung bezieht sich auf eine runde bauliche Anlage, insbesondere ein Rundsilo, mit einem kegel- oder auch konusförmigen Dachträger, der durch ein gespanntes Seil oder mehrere gespannte Seilstücke gebildet wird.

Runde bauliche Anlagen umfassen eine hohlzylinderförmige Wand und ein Dach, das in der Regel aus einem Dachträger und einer Dachabdeckung besteht.

Die hohlzylinderförmige Wand kann z.B. aus Beton, Mauerwerk, Metall oder Holz bestehen oder auch nur auf ringförmig angeordneten vertikal ausgerichteten Stützen reduziert sein, die ummantelt sein können. Entscheidend ist, dass die Wand geeignet ist die Dachlast zu tragen und Fügebereiche bietet in denen das Dach mit der Wand verbunden werden kann.

Die aus dem Stand der Technik bekannten runden baulichen Anlagen, in denen es keine Etagen- oder Raumaufteilung gibt, unterscheiden sich insbesondere durch die Ausführung des Daches, insbesondere des Dachträgers, auch Dachkonstruktion oder im Gebäudebau Dachstuhl genannt.

Man kennt sie hauptsächlich als Rundsilos. Sie können aber auch z.B. als Kletterhalle oder als eine Umhüllungskonstruktion für zu schützende Bäume ausgeführt sein.

Rundsilos sind heute in großem Umfang im Einsatz zur professionellen, sauberen, hygienischen und preiswerten Lagerung von rieselfähigen Gütern, insbesondere in landwirtschaftlichen Bereichen. Die zylindrische Wand besteht typischerweise aus Metall, Beton, Kunststoff-Verbundstoffen oder Holz. Da diese Wände bei einer Befüllung mit rieselfähigen Gütern (Schüttgut) nur einem gleichmäßigen, radial wirkenden Druck ausgesetzt sind und darüber hinaus nur die Dachlast tragen müssen, wird für die Wände eine Leichtbauweise bevorzugt, die wiederrum nach einem Leichtbaudach verlangt.

Die aus dem Stand der Technik bekannten Dächer von Rundsilos und anderen runden
baulichen Anlagen unterscheiden sich im Wesentlichen in der Ausführung des Dachträgers.

Eine Vielzahl von typischen Dachträgern sind selbsttragende Dachträger bestehend aus Dachsparren, die durch Quertraversen miteinander verbunden sind, wie z.B. aus der Patentschrift DE 102006 040 174 B3 bekannt. Die Silowand ist hier von Vertikalständern gebildet, die von Wandblechen eingehüllt sind. Von der Oberkante der Vertikalständer reichen bis zu einem oberen Kronenring die Dachsparren. Durch die Verbindung der Dachsparren untereinander über Quertraversen ist diese Konstruktion in sich stabil und grundsätzlich selbstragend. In Abhängigkeit von der Größe und der Ausführung der Silowand kann es jedoch notwendig sein, dass der Dachträger, zu dem das Gewicht der Dachabdeckung hinzukommt, mit zusätzlichen Vertikalstützen gestützt werden muss. Ein derartiger Dachträger erfordert einen hohen Vorfertigungsaufwand, einen großen Materialeinsatz und einen hohen Montageaufwand. Er bringt außerdem eine hohe Traglast auf die Silowand.

Aus der Patentschrift DE 44 26 176 C1 ist ein Hochsilodach in Leichtbauweise mit einer textilen Membran bekannt, die eine Dachhaut bildet. Die Membran liegt auf einer im Zentrum des Rundsilos stehenden Teleskopstütze auf und ist über die Außenseiten der Silowand nach unten geführt. Im Randbereich der Membran ist über deren Umfang ein Hohlsaum ausgebildet, in dem ein umlaufender Spannkörper angeordnet ist, der über Spannmittel mit der Außenseite der Silowand verspannt ist. Mit dem Ausfahren der Teleskopstütze wird die Membran nach der Montage an der Außenwand gespannt. Das hier offenbarte Hochsilodach benötigt zwingend eine im Zentrum des Rundsilos stehende Stütze. Eine Materialermüdung der Membran erfordert zwingend ein umfängliches Nachspannen an der Außenwand oder ein weiteres Ausfahren der Teleskopstütze, um die Dachneigung an der Silowand angrenzend aufrecht zu halten und so ein Bilden von Wassersäcken bei Regen zu verhindern. Diese Nacharbeiten müssen in großer Höhe ausgeführt werden. Dazu muss das Hochsilo entweder eingerüstet werden oder es bedarf der Besorgung und des Aufstellens eines Hubkranes, für den eine geeignete Standfläche gewährleistet sein muss.

In der Gebrauchsmusterschrift DE 20 2014 101 736 U1 ist ein Silodach beschrieben, welches sich zu dem in der Patentschrift DE 44 26 176 C1 offenbarten Hochsilodach im Wesentlichen dadurch unterscheidet, dass es Verstärkungsbänder aufweist. Das Silodach besteht aus einer Abdeckung, aus einem folienartigen Material die durch eine Mittelsäule getragen wird. Von der Mittelsäule sind zur Silowand hin Verstärkungsbänder an der Unterseite der Abdeckung angebracht, wobei die Verstärkungsbänder eine von der Abdeckung getrennte Struktur bilden. Vorteilhaft sind die Verstärkungsbänder jeweils gegenüberliegend an der Silowand und im mittleren Bereich an der Mittelsäule befestigt. Auch hier ist wie auch in der vorbenannten Patentschrift DE 44 26 176 C1 zwingend eine Mittelsäule bzw. vertikale Stütze erforderlich, damit das Silodach eine Dachneigung erhält. Die Mittelsäule und die Verstärkungsbänder bilden einen Dachträger im Sinne dieser Beschreibung.

Es ist die Aufgabe der Erfindung eine runde bauliche Anlage, insbesondere ein Silo zu entwickeln, das vorteilhaft konstruiert ist und insbesondere bei dem das Dach keine Mittelsäule umfasst.

Diese Aufgabe wird für eine runde bauliche Anlage mit einer hohlzylinderförmigen Wand, die eine gedachten Zylinderachse und eine hierzu orthogonale Wandmontageebene aufweist, und einem Dach, umfassend einen Dachträger und eine den Dachträger abdeckende Dachhaut, dadurch gelöst, dass der Dachträger von einem Firstring und einem an seinen beiden Enden miteinander verbundenen Seil oder mehreren jeweils an ihren eigenen beiden Enden miteinander verbundenen Seilstücken gebildet ist. Dabei enthält der Firstring ein Rohr mit einer Rohrlänge und weist eine Firstringachse, eine hierzu orthogonale obere und einer hierzu orthogonale unteren Firstmontageebene auf. Die Firstringachse ist koaxial zur Zylinderachse ausgerichtet und eine mittige Querschnittsebene des Firstrings und die Wandmontageebene fallen zusammen. Das Seil bzw. die Seilstücke ist/sind radial zwischen dem Firstring und der Wand im Wechsel, teilweise in einer der Wand zugewandten Konus- oder Kegelmantelfläche und teilweise in einer der Wand abgewandten Konus- oder Kegelmantelfläche liegend gespannt, wobei die der Wand abgewandte Konus- oder Kegelmantelfläche mit der Wand eine Dachneigung bildet. Dabei steht das Seil 7 bzw. stehen die Seilstücke mit dem Firstring 6 in der oberen und der unteren Firstmontagebene E_{F} und mit der Wand 1 in der Wandmontageebene Ew in Verbindung.

Ob ein einzelnes Seil verwendet wird oder mehrere Seilstücke verwendet werden hat, wenn man davon ausgeht, dass das eine Seil bzw. die Seilstücke über ihre Länge gleichmäßig gespannt sind, lediglich eine Auswirkung auf die Montage des Dachträgers. Für die durch den Dachträger gebildete Dachneigung ist insbesondere die Rohrlänge bestimmend, wobei sich die Dachneigung im Wesentlichen aus dem Radius des Umfanges der Wand und der hälftigen Rohrlänge ergibt.

Vorteilhaft ist an den beiden Enden des Rohrs jeweils ein Flansch vorhanden in dem jeweils eine der beiden Firstmontageebenen liegt und der nach außen über das Rohr ragt. Die Wand enthält einen weiteren Flansch, indem die Wandmontageebene liegt und der in einem von der Wand gebildeten Innenraum ragt. In dem weiteren Flansch und in den beiden Flanschen sind jeweils auf einer Kreislinie angeordnet, axial verlaufende Löchern vorhanden, die jeweils zu den unmittelbar benachbarten Löchern einen gleichen Winkelabstand aufweisen.

Um insbesondere bei der Montage des Dachträgers dem Seil einen geringen Reibwiderstand entgegenzusetzen weisen die Lochwände der Löcher begünstigend jeweils zum Firstring hin eine ins Lochinnere gewölbte Oberflächenform auf, die in die Stirnflächen der Flansche bzw. des weiteren Flansches stufenlos übergeht.

Alternativ zu den Löchern ist es von Vorteil, wenn an dem Firstring und der Wand jeweils auf einer Achse gelagerte Umlenkrollen angeordnet sind. Dabei sind die Achsen in tangentialer Richtung zum Firstring ausgerichtet in einer der Firstmontageebenen oder der Wandmontageebene angeordnet und die Umlenkrollen weisen jeweils zu den unmittelbar benachbarten Umlenkrollen einen gleichen Winkelabstand auf.

Vorteilhaft ist der Firstring ein monolithisches Bauteil.

Eine bevorzugte Ausführung des Rohres als Teleskoprohr hat den Vorteil, dass das Seil bzw. die Seilstücke erst nach ihrer fertigen Montage gespannt werden müssen indem das Teleskoprohr ausgefahren wird, womit sich die Länge des Rohres verlängert. Das Teleskoprohr kann Rastelemente aufweisen, so dass es in Stufen verstellbar ist in denen jeweils die Rastelemente einrasten oder es kann stufenlos verstellbar sein. Hierfür kann z.B. an einem äußeren von z.B. zwei das Teleskoprohr bildenden Rohrelementen eine Überwurfhülse aufgeschraubt sein, die gegen einen, am inneren Rohrelement vorhandenen Anschlag geschraubt wird.

Für die Montage des Seils ist es von Vorteil, wenn das eine Seil aus mehreren Teilstücken besteht. Das Seil muss dann nicht durch alle Löcher bzw. um alle Rollen geführt werden bevor seine Enden miteinander verbunden werden. Stattdessen sind die Teilstücke vorteilhaft z.B. nur durch ein Viertel der Anzahl der Loch in der Wand und im Firstring bzw. nur um ein Viertel der Anzahl der Rollen an der Wand und am Firstring geführt.

Es ist auch von Vorteil, wenn die mehreren Seilstücke jeweils eine einfache Verbindung zwischen dem Firstring und der Wand bilden. Eine einfache Verbindung heißt hier, dass der Firstring und die Wand nur über eine einzige Verbindung miteinander verbunden sind. Dass ist dann gegeben, wenn die Seilstücke jeweils durch ein Loch in der Wand und zwei Löcher im Firstring bzw. nur um eine Rolle an der Wand und zwei Rollen am Firstring geführt sind.

Eine erfindungsgemäße runde bauliche Anlage ist bevorzugt ein Rundsilo oder alternativ eine Halle.

Die Erfindung wird nachfolgen anhand von Ausführungsbeispielen und Zeichnungen näher erläutert.

Hierzu zeigen:
- Fig. 1: ein erstes Ausführungsbeispiel für eine runde bauliche Anlage in perspektivischer Ansicht ohne Dachhaut,
- Fig. 2a: eine Prinzipskizze einer runden baulichen Anlage ohne Dachhaut, wie sie auf alle Ausführungsbeispiele anwendbar ist, in Draufsicht,
- Fig. 2b: eine Prinzipskizze einer runden baulichen Anlage ohne Dachhaut, wie sie auf alle Ausführungsbeispiele anwendbar ist in einem Schnittbild und
- Fig. 3: eine vereinfachte Teilansicht eines vierten Ausführungsbeispiels in Draufsicht ohne Dachhaut.

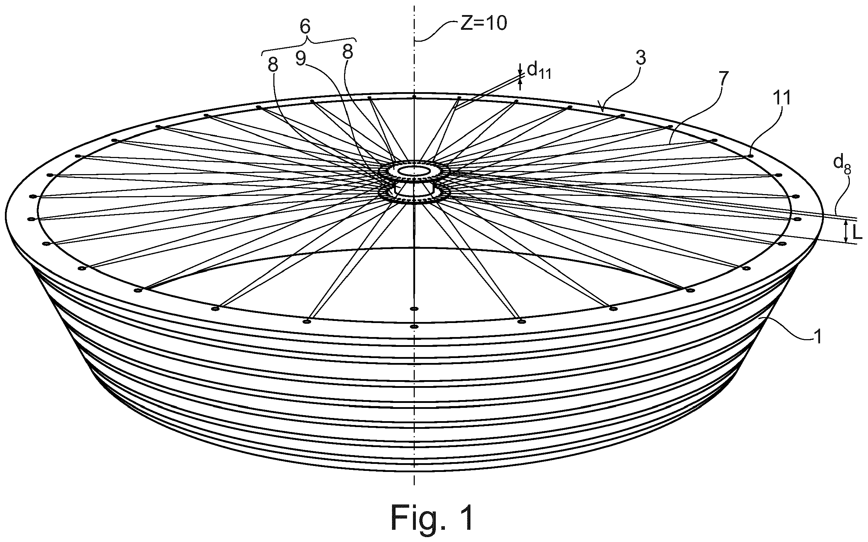

Alle erfindungsgemäß ausgeführten, runden baulichen Anlagen umfassen wie in **Fig. 1** gezeigt eine hohlzylinderförmige Wand 1, eine gedachte Zylinderachse 2 und eine Wandmontageebene Ew aufweisend, sowie ein Dach, umfassend einen Dachträger 4 und eine den Dachträger 4 abdeckende, hier nicht dargestellte Dachhaut.

In einem ersten Ausführungsbeispiel wird der Dachträger 4 von einem Firstring 6, eine Firstringachse 10 aufweisend, und einem an seinen beiden Seilenden miteinander verbundenen Seil 7 gebildet. Die Verbindung der beiden Seilenden ist hier durch ein Spannmittel hergestellt. Der Firstring 6 besteht aus einem Rohr 9, mit einer Rohrlänge I, das an seinen Rohrenden jeweils einen Flansch 8 mit einer Flanschdicke d₈ aufweist und der über den Rohrumfang des Rohres 9 hinausragt. In dem über das Rohr 9 hinausragenden Bereich der Flansche 8 sind auf einer Kreislinie gleichen Durchmessers jeweils Löcher 5 in axialer Richtung verlaufend eingebracht, in einer gleichen Anzahl und einem gleichen Winkelabstand β zu den jeweils unmittelbar benachbarten Löchern 5. Die äußeren Oberflächen der Flansche 8 liegen jeweils in einer Firstmontageebene E_{F}. Ihr Abstand zueinander entspricht der Rohrlänge I. Die Firstringachse 10 ist koaxial zur Zylinderachse 2 ausgerichtet und eine mittige Querschnittsebene Ein des Firstrings 6 fällt mit der Wandmontageebene Ew zusammen. An der Wand 1 ist ein weiterer Flansch 8 angebracht, der die Wand 1 zum Dach hin begrenzt. Dieser weitere Flansch 11 ragt in den von der Wand 1 gebildeten Innenraum und weißt eine im Vergleich zur Rohrlänge I geringe Flanschdicke d₁₁ auf. Die mittige Querschnittsebene E_{M} des Firstringes 6 fällt hier mit der mittigen Querschnittsebene des weiteren Flansches 11 zusammen, welche hier die Wandmontageebene E_{W} darstellt. Bei Vernachlässigung der Flanschdicke d₁₁ kann man die mittige Querschnittesebene des weiteren Flansches 11 als mit der Wandmontageebene Ew zusammenfallend betrachten.

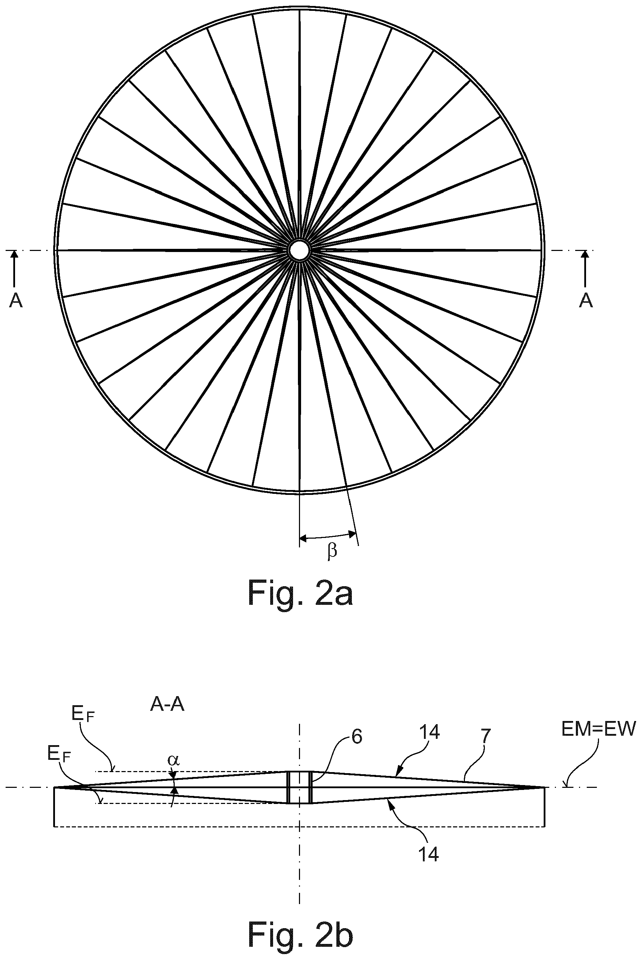

Das Seil 7 verläuft, wie gut in den **Fig. 2a und 2b** zu sehen ist, radial zwischen dem Firstring 6 und der Wand 1, im Wechsel teilweise in einer der Wand 1 zugewandten Konusmantelfläche 14 und teilweise in einer der Wand 1 abgewandten Konusmantelfläche 14. Die der Wand 1 abgewandte Konusmantelfläche 14 bildet mit der Wand 1 eine Dachneigung α. Aufgrund des Flansches 8, welcher an dem Firstring 6 der Wand 1 abgewandt angeordnet ist handelt es sich bei der Mantelfläche genau gesehen um eine Konusmantelfläche. Vernachlässigt man die Ausdehnung des Flansches 8 die im Vergleich zum Durchmesser der Wand 1 sehr gering ist, kann man die Mantelfläche als Kegelmantelfläche betrachten. Auch könnte an dem Flansch8 ein Kegelstück aufgesetzt oder ausgebildet sein, so dass eine tatsächliche Kegelmantelfläche gegeben ist.

Ein zweites in den Figuren nicht dargestelltes Ausführungsbeispiel unterscheidet sich zu dem ersten dadurch, dass das Seil aus mehreren Teilstücken besteht, die jeweils fest oder über ein Spannmittel miteinander verbunden sind.

Gemäß einem dritten in den Figuren ebenfalls nicht dargestellten Ausführungsbeispiel ist eine Vielzahl von Seilstücken vorhanden, die jeweils an ihren eigenen beiden Enden miteinander verbundenen eine Art Schlaufe bilden, die durch nur ein Loch5 in dem weiteren Flansch 11 und durch zwei Löcher 5 in den Flanschen 8 des Firstringes 6 geführt sind. Die Seilstücken können auch durch mehrere Löcher in den Flanschen 8 und dem weiteren Flansch 11 geführt sein.

Die vorgenannten Ausführungsbeispiele können jeweils vorteilhaft modifiziert werden in dem das Rohr ein Teleskoprohr ist. Durch eine Verlängerung des Teleskoprohres kann die Rohrlänge I vergrößert und das Seil bzw. die Seilstücke gespannt werden. Es bedarf dann keine Spannmittel im Seil bzw. zwischen den Seilstücken. Die Seilenden bzw. die Seilstückenden können dann fest miteinander verbunden sein.

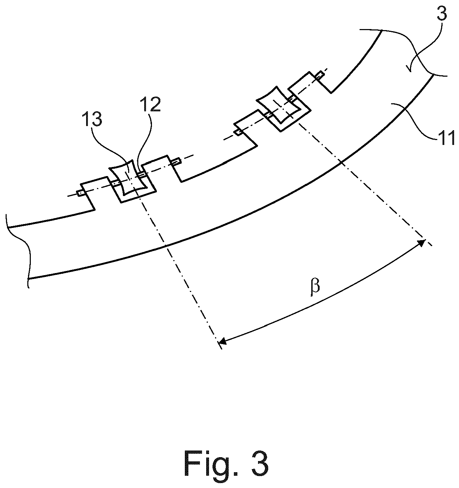

Gemäß einem vierten Ausführungsbeispiel, welches in einer Teilansicht in **Fig. 3** gezeigt ist, sind am oberen Ende der Wand ringförmig eine Vielzahl von auf Achsen 12 gelagerte Umlenkrollen 13 angeordnet. Die Mittellinien der Achsen 12 liegen in der Wandmontageebene Ew. Bei Vernachlässigung der Achsdurchmesser kann man die Achsen 12 als in der Wandmontageebene Ew liegend betrachten. In gleicher Weise angeordnet weist der dem Firstring 6 auf Achsen 12 gelagerte Rollen 13 auf. Im Unterschied zu allen vorgenannten Ausführungsbeispielen ist hier das Seil 7 nicht durch Löcher 5 sondern um Umlenkrollen 13 geführt. Statt Gleitreibung ist hier bei der Montage und insbesondere beim Spannen des Seiles Rollreibung zu überwinden.

Modifikationen dieses vierten Ausführungsbeispiels können alternativ einen Firstring 6 mit einem starren Rohr oder einem Teleskoprohr aufweisen, sowie anstelle eines einzelnen Seiles 7 mehrere Seilstücke enthalten.

Die Dachhaut besteht aus einem wasserdichten Material. Hier kommen insbesondere Gewebe aus synthetischem Material oder armierte Folien zum Einsatz. Armierte Folien haben zwar ein vergleichsweise höheres Gewicht, behalten aber ganzflächig betrachtet auch bei Ermüdung der Folie ihre Stabilität und Form.

Im Vergleich zum Stand der Technik kann bei einem erfindungsgemäßen Dach insbesondere auf eine Stütze verzichtet werden.

## Patentansprüche

1. Runde bauliche Anlage mit einer hohlzylinderförmigen Wand (1), die eine gedachten Zylinderachse (2) und eine hierzu orthogonale Wandmontageebene E_{W} aufweist und einem Dach, umfassend einen Dachträger (4) und eine den Dachträger (4) abdeckende Dachhaut, **dadurch gekennzeichnet,**
**dass** der Dachträger (4) von einem Firstring (6) und einem an seinen beiden Seilenden miteinander verbundenen Seil (7) oder mehreren jeweils an ihren eigenen beiden Seilenden miteinander verbundenen Seilstücken gebildet ist,
wobei der Firstring (6) ein Rohr (9) mit einer Rohrlänge (I) enthält und eine Firstringachse (10), eine hierzu orthogonale obere und einer hierzu orthogonale unteren Firstmontageebene (E_{F})aufweist, wobei die Firstringachse (10) koaxial zur Zylinderachse (2) ausgerichtet ist und eine mittige Querschnittsebene (E_{M}) des Firstrings (6) und die Wandmontageebene (Ew) zusammenfallen und
das Seil (7) bzw. die Seilstücke radial zwischen dem Firstring (6) und der Wand (1) im Wechsel teilweise in einer der Wand (1) zugewandten Konus- oder Kegelmantelfläche (14) und teilweise in einer der Wand (1) abgewandten Konus- oder Kegelmantelfläche (14) gespannt ist/sind, wobei die der Wand (1) abgewandte Konus- oder Kegelmantelfläche (14) mit der Wand (1) eine Dachneigung (α) bildet.

2. Runde bauliche Anlage nach Anspruch 1, **dadurch gekennzeichnet, dass** an den beiden Enden des Rohrs (9) jeweils ein Flansch (8) vorhanden ist, in dem jeweils eine der beiden Firstmontageebenen (E_{F}) liegt und der nach außen über das Rohr (9) ragt, dass die Wand (1) einen weiteren Flansch (11) enthält, in dem die Wandmontageebene (Ew) liegt und der in einem von der Wand (1) gebildeten Innenraum ragt und dass in dem weiteren Flansch (11) und in den beiden Flanschen (8), jeweils auf einer Kreislinie angeordnet, axial verlaufende Löcher (5) vorhanden sind, die jeweils zu den unmittelbar benachbarten Löchern (5) einen gleichen Winkelabstand (β) aufweisen.

3. Runde bauliche Anlage nach Anspruch 2, **dadurch gekennzeichnet, dass** die Löcher (5) jeweils eine Lochwand aufweisen, die zum Lochinneren hin eine nach innen gewölbte Oberflächenform aufweist, die in Stirnflächen der Flansche (8) bzw. des weiteren Flansches (11) stufenlos übergeht.

4. Runde bauliche Anlage nach Anspruch 1, **dadurch gekennzeichnet, dass** an der Wand (1) und dem Firstring (6), jeweils auf einer Achse (12) gelagerte Umlenkrollen (13) angeordnet sind, wobei die Achsen (12) in tangentialer Richtung zum Firstring (6) ausgerichtet, in einer der Firstmontageebenen (E_{F}) oder der Wandmontageebene (E_{M}) angeordnet sind und die Umlenkrollen (13) jeweils zu den unmittelbar benachbarten Umlenkrollen (13) einen gleichen Winkelabstand (β) aufweisen.

5. Runde bauliche Anlage nach Anspruch 1, **dadurch gekennzeichnet, dass** der Firstring (6) ein monolithisches Bauteil ist.

6. Runde bauliche Anlage nach Anspruch 1, **dadurch gekennzeichnet, dass** das Rohr (9) ein Teleskoprohr ist.

7. Runde bauliche Anlage nach Anspruch 1, **dadurch gekennzeichnet, dass** das eine Seil (7) vorhanden ist und das Seil (7) aus mehreren Teilstücken besteht.

8. Runde bauliche Anlage nach einem der Ansprüche 1 bis 6, **dadurch gekennzeichnet,**
**dass** die mehreren Seilstücke vorhanden sind und diese jeweils eine einfache Verbindung zwischen dem Firstring (6) und der Wand (1) bilden.

9. Runde bauliche Anlage nach einem der Ansprüche 1 bis 8, **dadurch gekennzeichnet,**
**dass** die bauliche Anlage ein Rundsilo ist.

10. Runde bauliche Anlage nach einem der Ansprüche 1 bis 8, **dadurch gekennzeichnet,**
**dass** die bauliche Anlage eine Halle ist.
